# EUROPEAN PATENT SPECIFICATION

(11) **EP 3 312 763 B1**
(45) Date of publication and mention of the grant of the patent: **20.11.2019**
(21) Application number: 16856693.3
(22) Date of filing: 26.07.2016
(51) Int. Cl.: G06K 9/00, G06K 9/03

(54) **METHOD, APPARATUS, AND MOBILE TERMINAL FOR DETERMINING FOREIGN MATERIAL ON SURFACE OF FINGERPRINT SENSOR**
VERFAHREN, VORRICHTUNG UND MOBILES ENDGERÄT ZUR BESTIMMUNG VON FREMDMATERIAL AUF DER OBERFLÄCHE EINES FINGERABDRUCKSENSORS
PROCÉDÉ, APPAREIL ET TERMINAL MOBILE POUR DÉTERMINER LA PRÉSENCE UN CORPS ÉTRANGER SUR LA SURFACE D'UN CAPTEUR D'EMPREINTES DIGITALES

(30) Priority: 19.10.2015 CN 201510681166
(43) Date of publication of application: 25.04.2018
(73) Proprietor: Guangdong Oppo Mobile Telecommunications Corp., Ltd, Dongguan, Guangdong 523859 (CN)
(72) Inventor: ZHANG, Qiang, Dongguan Guangdong 523860 (CN); WANG, Lizhong, Dongguan Guangdong 523860 (CN); ZHOU, Haitao, Dongguan Guangdong 523860 (CN); JIANG, Kui, Dongguan Guangdong 523860 (CN); HE, Wei, Dongguan Guangdong 523860 (CN)
(74) Representative: Mewburn Ellis LLP
(86) International application number: PCT/CN2016/091802
(87) International publication number: WO 2017/067258

(56) References cited:
- EP-A1- 1 624 412
- EP-A2- 1 220 139
- WO-A1-01/24700
- CN-A- 103 793 698
- CN-A- 104 965 615
- CN-A- 105 389 542
- US-A1- 2003 133 143
- US-A1- 2005 123 177
- US-A1- 2007 222 010

## Description

### TECHNICAL FIELD

The present disclosure relates to the field of terminal technology, and particularly to a method and an apparatus for determining existence of a foreign material on a surface of a fingerprint sensor, and a mobile terminal.

### BACKGROUND

As terminal technologies and image processing technologies advance, fingerprint recognition technology, as a high-security recognition technology, has been applied to many fields. The fingerprint recognition technology can bring security protection for individual private devices and is convenient for users. For example, terminals, application software or files of the terminal can be encrypted or decrypted (in other words, locked or unlocked) via the fingerprint recognition technology, to provide better experience for the users.

The fingerprint recognition technology needs the user to touch a surface of a fingerprint sensor of the terminal with a finger, to acquire fingerprint information of the user. Inevitably, in a process of acquiring the fingerprint information of the user, water or other foreign materials (also known as foreign object) may be present on the surface of the fingerprint sensor or the finger of the user. In the related art, methods for determining existence of a foreign material on a surface of a fingerprint sensor are very complicated and accuracy thereof are not very high.

EP 1 624 412 A1 recites a biological information measuring device, in which an image representing biological information is input from a biological information input unit and statistical quantities, such as the mean value and standard deviation of the pixel values of the sampled image, are calculated. The statistical quantities are used to extract a region containing biological information, eliminate sensitivity variations and the effects of stains in order to generate a biological image with high contrast.

US 2003/0133143 A1 recites a system and method for obtaining a biometric image such as a ten-print fingerprint impression. The system a finger guide used to guide positioning a finger slap of four fingers at a time onto a platen. The system also includes at least four indicators that indicate an acceptable scan condition of each finger of a finger slap in response to a detected finger slap image.

WO 01/24700 A1 recites a biometric sensing system and techniques for detecting spoofs of a living finger. The system comprises an image capture device configured to sample an applied object and create an electrical representation of the applied object and a spoof detection module configured to analyze the electrical representation of the applied object for relative intensity, density, geometric, or temporal anomalies indicative of a non-living applied object.

EP 1 220 139 A2 recites a fingerprint sensing circuit in which a voltage change is applied to the body during sensing.

US 2005/123177 A1 recites a method for determining whether or not the finger of the person to be authenticated is part of a living body.

CN 104965615 A recites a terminal arranged to obtain current environment temperature, environment humidity, and touch screen temperature. A surface of a touch screen is heated if it is judged to be in a condition where liquid will form thereon.

### SUMMARY

Embodiments of the present disclosure provide a method and an apparatus for determining existence of a foreign material on a surface of a fingerprint sensor, and a mobile terminal, to simplify an operation of determining existence of the foreign material on the surface of the fingerprint sensor of a terminal and improve an accuracy of determining existence of the foreign material on the surface of the fingerprint sensor of a terminal.

According to one aspect of the invention, there is provided a method for determining existence of a foreign material on a surface of a fingerprint sensor as set out in claim 1. The method may include the following steps.

A current capacitance value of the fingerprint sensor of a terminal is obtained.

A first difference between the current capacitance value and a preset capacitance reference value is calculated. The preset capacitance reference value is obtained with no foreign material present on the surface of the fingerprint sensor before leaving the factory.

Determine that the foreign material is present on or exist on the surface of the fingerprint sensor when the first difference is within a preset foreign-material threshold range.

According to another aspect of the invention, there is provided an apparatus for determining existence of a foreign material on a surface of a fingerprint sensor as set out in claim 8. The apparatus includes a capacitance-value obtaining module, a first-difference calculating module, and a foreign-material determining module.

The capacitance-value obtaining module is configured to obtain a current capacitance value of the fingerprint sensor of a terminal.

The first-difference calculating module is configured to calculate a first difference between the current capacitance value and a preset capacitance reference value.

The foreign-material determining module is configured to determine that the foreign material in on the surface of the fingerprint sensor, when the first difference is within a preset foreign-material threshold range.

According to still another aspect of the embodiments of the present disclosure, there is provided a mobile terminal. The mobile terminal includes a fingerprint sensor and an apparatus for determining existence of a foreign material on a surface of the fingerprint sensor. The apparatus is coupled with the fingerprint sensor and includes a capacitance-value obtaining module, a first-difference calculating module, and a foreign-material determining module.

The capacitance-value obtaining module is configured to obtain a current capacitance value of the fingerprint sensor of the terminal.

The first-difference calculating module is configured to calculate a first difference between the current capacitance value and a preset capacitance reference value.

The foreign-material determining module is configured to determine that the foreign material is present on the surface of the fingerprint sensor, when the first difference is within a preset foreign-material threshold range.

According to the method and the apparatus for determining existence of the foreign material on the surface of the fingerprint sensor, and the mobile terminal, by detecting the difference between the current capacitance value of the fingerprint sensor and the preset capacitance reference value, whether the difference is within the preset foreign-material threshold range is determined. Further determine that the foreign material is on the surface of the fingerprint sensor when the difference is within the preset foreign-material threshold range. That is, whether the foreign material is present on the surface of the fingerprint sensor is determined based on capacitance value changes of the fingerprint sensor, therefore the operation of determining that the foreign material is present on the surface of the fingerprint sensor of the terminal can be simplified and the accuracy of determining that the foreign material is present on the surface of the fingerprint sensor of the terminal can be improved.

### BRIEF DESCRIPTION OF THE DRAWINGS

FIG. 1 is a flow chart illustrating a method for determining existence of a foreign material on a surface of a fingerprint sensor according to a first embodiment of the present disclosure.
FIG. 2 is a flow chart illustrating a method for determining existence of a foreign material on a surface of a fingerprint sensor according to a second embodiment of the present disclosure.
FIG. 3 is a schematic structural diagram illustrating an apparatus for determining existence of a foreign material on a surface of a fingerprint sensor according to a third embodiment of the present disclosure.
FIG. 4 is a schematic structural diagram illustrating a mobile terminal according to a fourth embodiment of the present disclosure.

### DETAILED DESCRIPTION OF ILLUSTRATED EMBODIMENTS

To describe the objectives, technical solutions, and advantages of embodiments of the present disclosure more clearly, the embodiments of the present disclosure are further described in detail below with reference to the accompanying drawings. It should be noted that, the embodiments described herein are merely used to explain rather than to limit the present disclosure. In addition, to facilitate description, a part of contents related to the present disclosure rather than all the contents are illustrated in the accompanying drawings. Prior to interpreting the exemplary embodiments in detail, it should be mentioned that, some exemplary embodiments are described as processes or methods depicted as a flowchart. Although various operations (or steps) in the flowchart are described as sequential processes, these operations can be performed in parallel, concurrently, or synchronously. Moreover, orders of these operations can be rearranged. The process may be terminated when the operation thereof is completed, and additional steps may not be included in the accompany drawings. The processes may correspond to methods, functions, procedures, subroutines, subroutines, and the like.

### First embodiment

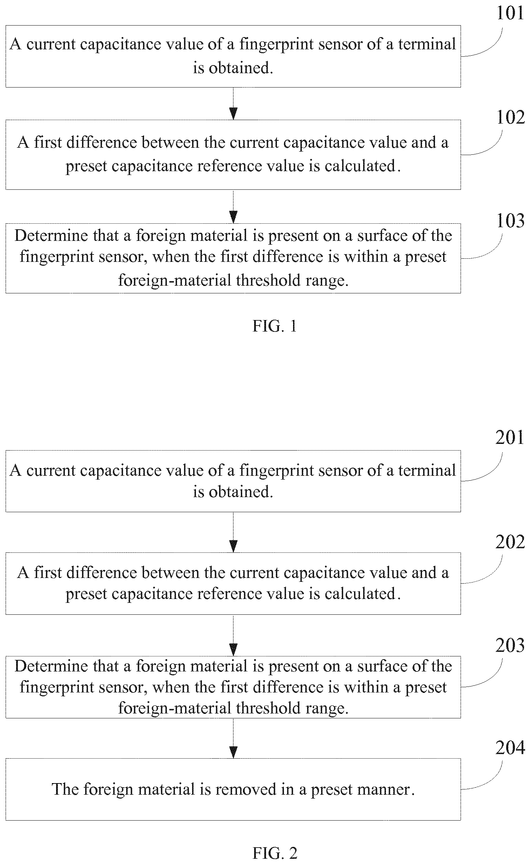

FIG. 1 is a flow chart illustrating a method for determining existence of a foreign material on a surface of a fingerprint sensor according to a first embodiment of the present disclosure. The method can be executed by an apparatus for determining existence of a foreign material on a surface of a fingerprint sensor. The apparatus can be implemented by software and/or hardware and can be embedded in a terminal as a part of the terminal. As illustrated in FIG. 1, the method of the embodiment includes the following.

At 101, a current capacitance value of the fingerprint sensor of a terminal is obtained.

The "terminal" referred to herein includes but is not limited to devices equipped with a fingerprint sensor, such as mobile phones, tablet computers, laptops or the like.

In the embodiment, a current state of the fingerprint sensor of the terminal can be a state of the fingerprint sensor before or after a user acts on (for example, touches or presses) the fingerprint sensor.

At 102, a first difference between the current capacitance value and a preset capacitance reference value is calculated.

The preset capacitance reference value is obtained with no foreign material present on the surface of the fingerprint sensor before leaving the factory, and is stored in a system in advance.

At 103, determine that the foreign material is present on the surface of the fingerprint sensor when the first difference is within a preset foreign-material threshold range.

In the embodiment, the foreign material is conductive and therefore, whether the foreign material is present on the surface of the fingerprint sensor can be determined according to capacitance value changes of the fingerprint sensor. The foreign material includes but is not limited to water.

The preset foreign-material threshold range is set in advance according to experimental data of capacitance-change tests performed on the fingerprint sensor when different conductive foreign materials are present on the surface of the fingerprint sensor. The preset foreign-material threshold range can be determined according to different foreign materials on the surface of the fingerprint sensor in actual use.

In the case where the user touches the surface of the fingerprint sensor with a finger when no foreign material is present on the surface of the fingerprint sensor, the capacitance value change of the fingerprint sensor relative to the preset capacitance reference value will be large; on the contrary, the capacitance value change of the fingerprint sensor relative to the preset capacitance reference value will be small when the foreign material is present on the surface of the fingerprint sensor. When the difference between the current capacitance value of the fingerprint sensor and the preset capacitance reference value is within the preset foreign-material threshold range, determine that the foreign material is on the surface of the fingerprint sensor.

When the foreign material is present on the surface of the fingerprint sensor, the foreign material may be on the surface of the fingerprint sensor, or left on the surface of the fingerprint sensor after the user touches the fingerprint sensor with the finger with the foreign material thereon.

According to the method for determining existence of the foreign material on the surface of the fingerprint sensor of the first embodiment, by detecting the difference between the current capacitance value of the fingerprint sensor and the preset capacitance reference value, whether the difference is within the preset foreign-material threshold range is determined. Then determine the foreign material is present on the surface of the fingerprint sensor, when the difference is within the preset foreign-material threshold range. In other words, whether the foreign material is present on the surface of the fingerprint sensor is determined according to the capacitance value change of the fingerprint sensor, thereby simplifying the operation of determining existence of the foreign material present on the surface of the fingerprint sensor of the terminal and improving the accuracy of determining existence of the foreign material present on the surface of the fingerprint sensor of the terminal.

### Second embodiment

FIG. 2 is a flow chart illustrating a method for determining existence of a foreign material on a surface of a fingerprint sensor according to a second embodiment of the present disclosure. The embodiment is further optimized on the basis of the first embodiment. In the embodiment, the method may further include removing the foreign material in a preset manner after determining that the foreign material is present on the surface of the fingerprint sensor.

As illustrated in FIG. 2, the method of the embodiment includes the following.

At 201, a current capacitance value of the fingerprint sensor of a terminal is obtained.

At 202, a first difference between the current capacitance value and a preset capacitance reference value is calculated.

At 203, if the first difference is within a preset foreign-material threshold range, determine that the foreign material is present on the surface of the fingerprint sensor.

At 204, the foreign material is removed in a preset manner.

As one implementation, removing the foreign material in the preset manner in 204 may include: increasing a temperature of the fingerprint sensor to remove the foreign material.

For example, increasing the temperature of the fingerprint sensor may include at least one of: increasing a power of the fingerprint sensor, to increase the temperature of the fingerprint sensor; controlling a heating device corresponding to the fingerprint sensor to heat the fingerprint sensor, to increase the temperature of the fingerprint sensor.

The power of the fingerprint sensor can be increased at a constant rate or a step-changed rate. Likewise, the fingerprint sensor can be heated at a constant rate or a step-changed rate by controlling the heating device corresponding to the fingerprint sensor. The embodiment of the disclosure is not limited thereto.

As another implementation, removing the foreign material in the preset manner in 204 may include: sending a message or information indicating that the foreign material is present on the surface of the fingerprint sensor, so as to prompt a user to remove the foreign material.

The message indicating that the foreign material is present on the surface of the fingerprint sensor may be a text prompt message, a sound prompt message, or a combination of both, and the embodiment is not limited thereto.

The method may further include the following after increasing the temperature of the fingerprint sensor. The current capacitance value of the fingerprint sensor of the terminal is obtained when a preset time has elapsed. A second difference between the current capacitance value and the preset capacitance reference value is then calculated. Then determine that the foreign material is present on the surface of the fingerprint sensor when the second difference is within the preset foreign-material threshold range. Thereafter, the message indicating that the foreign material is present on the surface of the fingerprint sensor is sent, to prompt the user to remove the foreign material.

The preset time can be set in advance according to the performance of heating the fingerprint sensor by the terminal. For example, if the foreign material on the surface of the fingerprint sensor is water and the water can be removed within 10 seconds by increasing the temperature of the fingerprint sensor, then a value of the preset time can be 10 seconds.

When the temperature of the fingerprint sensor has been increased for the preset time, determine whether the foreign material is on the surface of the fingerprint sensor. If the foreign material is on the surface of the fingerprint sensor, it means that increasing the temperature of the fingerprint sensor is not sufficient to remove the foreign material. Then the message indicating that the foreign material is present on the surface of the fingerprint sensor is sent, to prompt the user to remove the foreign material, thus ensuring that the foreign material on the surface of the fingerprint sensor can be removed completely.

If the foreign material on the surface of the fingerprint sensor is water, the water will be removed with the increasing of the temperature of the fingerprint sensor within the preset time. If the foreign material present on the surface of the fingerprint sensor is still detected after the preset time has elapsed, it indicates that the foreign material on the surface of the fingerprint sensor may be a foreign material that cannot be removed by increasing the temperature of the fingerprint sensor. The message indicating that the foreign material is present on the surface of the fingerprint sensor is then sent, so as to prompt the user to remove foreign material.

According to the method for determining existence of the foreign material on the surface of the fingerprint sensor of the second embodiment, whether the difference is within the preset foreign-material threshold range is determined by detecting the difference between the current capacitance value of the fingerprint sensor and the preset capacitance reference value. When the difference is within the preset foreign-material threshold range, determine that the foreign material is on the surface of the fingerprint sensor and then the foreign material will be removed in the preset manner. In conclusion, whether the foreign material is present on the surface of the fingerprint sensor is determined based on capacitance value changes of the fingerprint sensor, therefore, the operation of determining existence of the foreign material present on the surface of the fingerprint sensor of the terminal can be simplified and the accuracy of determining existence of the foreign material present on the surface of the fingerprint sensor of the terminal can be improved. Moreover, the foreign material is removed in the preset manner, thus improving the fingerprint recognition rate of the fingerprint sensor.

### Third embodiment

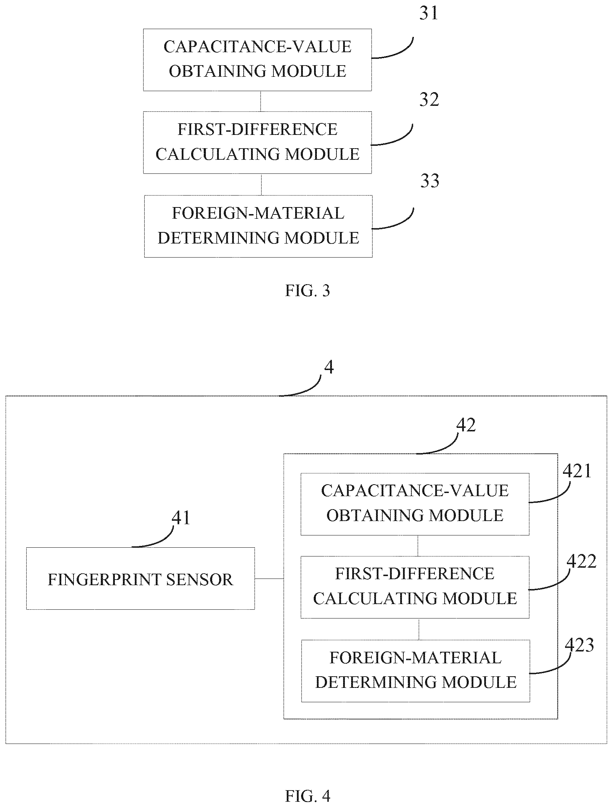

FIG. 3 is a schematic structural diagram illustrating an apparatus for determining existence of a foreign material on a surface of a fingerprint sensor according to a third embodiment of the present disclosure. As illustrated in FIG. 3, the apparatus of the third embodiment includes a capacitance-value obtaining module 31, a first-difference calculating module 32, and a foreign-material determining module 33.

The capacitance-value obtaining module 31 is configured to obtain a current capacitance value of the fingerprint sensor of a terminal.

The first-difference calculating module 32 is configured to calculate a first difference between the current capacitance value and a preset capacitance reference value.

The foreign-material determining module 33 is configured to determine that the foreign material is present on the surface of the fingerprint sensor, if the first difference is within a preset foreign-material threshold range.

Furthermore, the apparatus may further include a foreign-material removing module. The foreign-material removing module is configured to remove the foreign material in a preset manner.

As one implementation, the foreign-material removing module may include a first foreign-material removing unit. The first foreign-material removing unit is configured to increase a temperature of the fingerprint sensor, to remove the foreign material.

As one implementation, the foreign-material removing module may include a second foreign-material removing unit. The second foreign-material removing unit is configured to send a message indicating that the foreign material is on the surface of the fingerprint sensor, to prompt a user to remove the foreign material.

Furthermore, the first foreign-material removing unit is further configured to: obtain the current capacitance value of the fingerprint sensor of the terminal when a preset time has elapsed, after increasing the temperature of the fingerprint sensor; calculate a second difference between the current capacitance value obtained when the preset time has elapsed and the preset capacitance reference value; determine that the foreign material is present on the surface of the fingerprint sensor when the second difference is within the preset foreign-material threshold range; send the message indicating that the foreign material is present on the surface of the fingerprint sensor, to prompt a user to remove the foreign material.

Furthermore, the first foreign-material removing unit configured to increase a temperature of the fingerprint sensor can be configured to execute one of: increasing a power of the fingerprint sensor, to increase the temperature of the fingerprint sensor; controlling a heating device corresponding to the fingerprint sensor to heat the fingerprint sensor, to increase the temperature of the fingerprint sensor.

Furthermore, the apparatus may further include a foreign-material threshold setting module. The foreign-material threshold setting module is configured to set the preset foreign-material threshold range according to experimental data of capacitance change tests conducted on the fingerprint sensor when different conductive foreign materials are present on the surface of the fingerprint sensor.

The apparatus for determining existence of the foreign material on the surface of the fingerprint sensor of the embodiments of the disclosure can perform any one of the methods of the embodiments. The apparatus can have function modules to perform the method and achieve advantageous effects corresponding to the method.

### Fourth Embodiment

FIG. 4 is a schematic structural diagram illustrating a mobile terminal according to a fourth embodiment of the present disclosure. In the embodiment, the mobile terminal 4 includes a fingerprint sensor 41 and an apparatus 42 for determining existence of a foreign material on a surface of a fingerprint sensor. The apparatus 42 is coupled with the fingerprint sensor 41 and includes a capacitance-value obtaining module 421, a first-difference calculating module 422, and a foreign-material determining module 423.

The capacitance-value obtaining module 421 is configured to obtain a current capacitance value of the fingerprint sensor of the terminal.

The first-difference calculating module 422 is configured to calculate a first difference between the current capacitance value and a preset capacitance reference value.

The foreign-material determining module 423 is configured to determine that the foreign material is present on the surface of the fingerprint sensor, if the first difference is within a preset foreign-material threshold range.

Furthermore, the apparatus may further include a foreign-material removing module. The foreign-material removing module is configured to remove the foreign material in a preset manner.

As one implementation, the foreign-material removing module may include a first foreign-material removing unit. The first foreign-material removing unit is configured to increase a temperature of the fingerprint sensor, to remove the foreign material.

As one implementation, the foreign-material removing module may include a second foreign-material removing unit. The second foreign-material removing unit is configured to send a message indicating that the foreign material is present on the surface of the fingerprint sensor, to prompt a user to remove the foreign material.

Furthermore, the first foreign-material removing unit is further configured to: obtain the current capacitance value of the fingerprint sensor of the terminal when a preset time has elapsed, after increasing the temperature of the fingerprint sensor; calculate a second difference between the current capacitance value and the preset capacitance reference value; determine that the foreign material is present on the surface of the fingerprint sensor when the second difference is within the preset foreign-material threshold range; send the message indicating that the foreign material is present on the surface of the fingerprint sensor, to prompt a user to remove the foreign material.

Furthermore, the first foreign-material removing unit configured to increase a temperature of the fingerprint sensor can be configured to execute one of: increasing a power of the fingerprint sensor, to increase the temperature of the fingerprint sensor; controlling a heating device corresponding to the fingerprint sensor to heat the fingerprint sensor, to increase the temperature of the fingerprint sensor.

The mobile terminal of the embodiments of the disclosure includes the apparatus for determining existence of the foreign material on the surface of the fingerprint sensor, and can perform any one of the methods of the embodiments. Function modules corresponding to the method can be provided in the apparatus and advantageous effects similar to the method of the apparatus can be achieved.

It should be noted that, those of ordinary skill in the art may understand that all or part of the steps in the methods of the foregoing embodiments may be implemented by a program instructing relevant hardware. The program may be stored in a computer-readable storage medium such as the memory of the terminal and executed by at least one processor of the terminal. When executed, the program may include procedures of the embodiments such as the method for determining existence of the foreign material on the surface of the fingerprint sensor. The storage medium includes but is not limited to a Read Only Memory (ROM), a Random Access Memory (RAM), a magnetic disk, an optical disk, or the like.

Note that the above are exemplary embodiments of the present disclosure and the applied technical principles. Those skilled in the art should understand that the present disclosure is not limited to the specific embodiments described herein, and various changes, modifications, and substitutions can be made by those skilled in the art without departing from the scope of the present disclosure. Although has been described in detail by way of embodiments, the present disclosure is not limited to the above embodiments. The scope of the present disclosure should be determined by the appended claims.

## Claims

1. A method for determining existence of a foreign material on a surface of a fingerprint sensor, **characterised in that** the method comprises:
obtaining (101, 201) a current capacitance value of the fingerprint sensor of a terminal;
calculating (102, 202) a first difference between the current capacitance value and a preset capacitance reference value, wherein the preset capacitance reference value is obtained with no foreign material present on the surface of the fingerprint sensor before leaving the factory; and
determining (103, 203) that the foreign material is present on the surface of the fingerprint sensor, when the first difference is within a preset foreign-material threshold range.

2. The method of claim 1, wherein the method further comprises the follows subsequent to determining that the foreign material is present on the surface of the fingerprint sensor:
removing (204) the foreign material in a preset manner.

3. The method of claim 2, wherein removing (204) the foreign material in a preset manner comprises:
increasing a temperature of the fingerprint sensor, to remove the foreign material.

4. The method of claim 2, wherein removing (204) the foreign material in a preset manner comprises:
sending a message indicating that the foreign material is present on the surface of the fingerprint sensor, to prompt a user to remove the foreign material.

5. The method of claim 3, wherein the method further comprises the following after increasing a temperature of the fingerprint sensor:
obtaining the current capacitance value of the fingerprint sensor of the terminal that has been subjected to the removing of the foreign material, when a preset time has elapsed;
calculating a second difference between the current capacitance value of the fingerprint sensor of the terminal that has been subjected to the removing of the foreign material and the preset capacitance reference value;
determining that the foreign material is present on the surface of the fingerprint sensor when the second difference is within the preset foreign-material threshold range; and
sending a message indicating that the foreign material is present on the surface of the fingerprint sensor, to prompt a user to remove the foreign material.

6. The method of claim 3, wherein increasing a temperature of the fingerprint sensor comprises one of:
increasing a power of the fingerprint sensor, to increase the temperature of the fingerprint sensor; and
controlling a heating device corresponding to the fingerprint sensor to heat the fingerprint sensor, to increase the temperature of the fingerprint sensor.

7. The method of claim 1, wherein the method further comprises the following before determining that the foreign material is present on the surface of the fingerprint sensor when the first difference is within a preset foreign-material threshold range:
setting the preset foreign-material threshold range according to experimental data of capacitance change tests which are performed on the fingerprint sensor when different conductive foreign materials are present on the surface of the fingerprint sensor.

8. An apparatus for determining existence of a foreign material on a surface of a fingerprint sensor, **characterised in that** the apparatus comprises:
a capacitance-value obtaining module (31, 421), configured to obtain a current capacitance value of the fingerprint sensor of a terminal;
a first-difference calculating module (32, 422), configured to calculate a first difference between the current capacitance value and a preset capacitance reference value, wherein the preset capacitance reference value is obtained with no foreign material present on the surface of the fingerprint sensor before leaving the factory; and
a foreign-material determining module (33, 423), configured to determine that the foreign material is present on the surface of the fingerprint sensor, when the first difference is within a preset foreign-material threshold range.

9. The apparatus of claim 8, wherein the apparatus further comprises:
a foreign-material removing module, configured to remove the foreign material in a preset manner.

10. The apparatus of claim 9, wherein the foreign-material removing module comprises:
a first foreign-material removing unit, configured to increase a temperature of the fingerprint sensor, to remove the foreign material.

11. The apparatus of claim 9, wherein the foreign-material removing module comprises:
a second foreign-material removing unit, configured to send a message indicating that the foreign material is present on the surface of the fingerprint sensor, to prompt a user to remove the foreign material.

12. The apparatus of claim 10, wherein the first foreign-material removing unit is further configured to:
obtain the current capacitance value of the fingerprint sensor of the terminal that has been subjected to the removing of the foreign material when a preset time has elapsed, after increasing the temperature of the fingerprint sensor;
calculate a second difference between the current capacitance value of the fingerprint sensor of the terminal that has been subjected to the removing of the foreign material and the preset capacitance reference value;
determine that the foreign material is present on the surface of the fingerprint sensor when the second difference is within the preset foreign-material threshold range; and
send a message indicating that the foreign material is present on the surface of the fingerprint sensor, to prompt a user to remove the foreign material.

13. The apparatus of claim 10, wherein the first foreign-material removing unit configured to increase a temperature of the fingerprint sensor is configured to execute one of:
increasing a power of the fingerprint sensor, to increase the temperature of the fingerprint sensor; and
controlling a heating device corresponding to the fingerprint sensor to heat the fingerprint sensor, to increase the temperature of the fingerprint sensor.

14. The apparatus of claim 8, wherein the apparatus further comprises:
a foreign-material threshold setting module, configured to set the preset foreign-material threshold range according to experimental data of capacitance change tests which are performed on the fingerprint sensor when different conductive foreign materials are present on the surface of the fingerprint sensor.

15. A mobile terminal (4) comprising a fingerprint sensor (41) and an apparatus of any of claims 8-13, wherein the apparatus is coupled with the fingerprint sensor (41) and configured to determine a foreign material on a surface of the fingerprint sensor (41).

## Patentansprüche

1. Verfahren zur Bestimmung des Vorhandenseins eines Fremdmaterials auf einer Oberfläche eines Fingerabdrucksensors, **dadurch gekennzeichnet, dass** das Verfahren Folgendes umfasst:
das Erhalten (101, 201) eines aktuellen Kapazitätswerts des Fingerabdrucksensors eines Endgeräts;
das Berechnen (102, 202) einer ersten Differenz zwischen dem aktuellen Kapazitätswert und einem voreingestellten Referenz-Kapazitätswert, wobei der voreingestellte Referenz-Kapazitätswert ohne Vorhandensein von Fremdmaterial auf der Oberfläche des Fingerabdrucksensors, bevor dieser die Fabrik verlässt, erhalten wird; und
das Bestimmen (103, 203), dass das Fremdmaterial auf der Oberfläche des Fingerabdrucksensors vorhanden ist, wenn die erste Differenz in einem voreingestellten Fremdmaterial-Schwellenbereich liegt.

2. Verfahren nach Anspruch 1, wobei das Verfahren ferner, nach dem Bestimmen, dass Fremdmaterial auf der Oberfläche des Fingerabdrucksensors vorhanden ist, Folgendes umfasst:
das Entfernen (204) des Fremdmaterials auf voreingestellte Weise.

3. Verfahren nach Anspruch 2, wobei das Entfernen (204) des Fremdmaterials auf eine voreingestellte Weise Folgendes umfasst:
das Erhöhen einer Temperatur des Fingerabdrucksensors, um das Fremdmaterial zu entfernen.

4. Verfahren nach Anspruch 2, wobei das Entfernen (204) des Fremdmaterials auf eine voreingestellte Weise Folgendes umfasst:
das Senden einer Nachricht, die angibt, dass das Fremdmaterial auf der Oberfläche des Fingerabdrucksensors vorhanden ist, um einen Benutzer zu veranlassen, das Fremdmaterial zu entfernen.

5. Verfahren nach Anspruch 3, wobei das Verfahren ferner, nach dem Erhöhen der Temperatur des Fingerabdrucksensors, Folgendes umfasst:
das Erhalten des aktuellen Kapazitätswerts des Fingerabdrucksensors des Endgeräts, das dem Entfernen des Fremdmaterials unterzogen wurde, wenn eine voreingestellte Zeit vergangen ist;
das Berechnen einer zweiten Differenz zwischen dem aktuellen Kapazitätswert des Fingerabdrucksensors des Endgeräts, das dem Entfernen des Fremdmaterials unterzogen wurde, und dem voreingestellten Referenz-Kapazitätswert;
das Bestimmen, dass Fremdmaterial auf der Oberfläche des Fingerabdrucksensors vorhanden ist, wenn die zweite Differenz innerhalb des voreingestellten Fremdmaterial-Schwellenbereichs liegt; und
das Senden einer Nachricht, die angibt, dass das Fremdmaterial auf der Oberfläche des Fingerabdrucksensors vorhanden ist, um einen Benutzer zu veranlassen, das Fremdmaterial zu entfernen.

6. Verfahren nach Anspruch 3, wobei das Erhöhen einer Temperatur des Fingerabdrucksensors eines des Folgenden umfasst:
das Erhöhen einer Leistung des Fingerabdrucksensors, um die Temperatur des Fingerabdrucksensors zu erhöhen; und
das Steuern einer Heizvorrichtung, die zu dem Fingerabdrucksensor gehört, um den Fingerabdrucksensor zu erhitzen, um die Temperatur des Fingerabdrucksensors zu erhöhen.

7. Verfahren nach Anspruch 1, wobei das Verfahren ferner, vor dem Bestimmen, dass das Fremdmaterial auf der Oberfläche des Fingerabdrucksensors vorhanden ist, wenn die erste Differenz innerhalb eines voreingestellten Fremdmaterial-Schwellenbereichs liegt, Folgendes umfasst:
das Einstellen des voreingestellten Fremdmaterial-Schwellenbereichs gemäß Experimentaldaten von Kapazitätsveränderungstests, die an dem Fingerabdrucksensor durchgeführt werden, wenn unterschiedliche leitfähige Fremdmaterialien auf der Oberfläche des Fingerabdrucksensors vorhanden sind.

8. Vorrichtung zum Bestimmen des Vorhandenseins eines Fremdmaterials auf der Oberfläche eines Fingerabdrucksensors, **dadurch gekennzeichnet, dass** die Vorrichtung Folgendes umfasst:
ein Kapazitätswert-Erhaltungsmodul (31, 421), das konfiguriert ist, um einen aktuellen Kapazitätswert des Fingerabdrucksensors eines Endgeräts zu erhalten;
ein Erstdifferenzberechnungsmodul (32, 422), das konfiguriert ist, um eine erste Differenz zwischen dem aktuellen Kapazitätswert und einem voreingestellten Referenz-Kapazitätswert zu berechnen, wobei der voreingestellte Referenz-Kapazitätswert ohne Vorhandensein von Fremdmaterial auf der Oberfläche des Fingerabdrucksensors, bevor dieser die Fabrik verlässt, erhalten wird; und
ein Fremdmaterialbestimmungsmodul (33, 423), das konfiguriert ist, um zu bestimmen, dass das Fremdmaterial auf der Oberfläche des Fingerabdrucksensors vorhanden ist, wenn die erste Differenz in einem voreingestellten Fremdmaterial-Schwellenbereich liegt.

9. Vorrichtung nach Anspruch 8, wobei die Vorrichtung ferner Folgendes umfasst:
ein Fremdmaterialentfernungsmodul, das konfiguriert ist, um das Fremdmaterial auf voreingestellte Weise zu entfernen.

10. Vorrichtung nach Anspruch 9, wobei das Fremdmaterialentfernungsmodul Folgendes umfasst:
eine erste Fremdmaterialentfernungseinheit, die konfiguriert ist, um eine Temperatur des Fingerabdrucksensors zu erhöhen, um das Fremdmaterial zu entfernen.

11. Vorrichtung nach Anspruch 9, wobei das Fremdmaterialentfernungsmodul Folgendes umfasst:
eine zweite Fremdmaterialentfernungseinheit, die konfiguriert ist, um eine Nachricht zu senden, die angibt, dass das Fremdmaterial auf der Oberfläche des Fingerabdrucksensors vorhanden ist, um einen Benutzer zu veranlassen, das Fremdmaterial zu entfernen.

12. Vorrichtung nach Anspruch 10, wobei die erste Fremdmaterialentfernungseinheit ferner konfiguriert ist, um:
den aktuellen Kapazitätswert des Fingerabdrucksensors des Endgeräts, das dem Entfernen des Fremdmaterials unterzogen wurde, zu erhalten, wenn eine voreingestellte Zeit vergangen ist, nachdem die Temperatur des Fingerabdrucksensors erhöht wurde;
eine zweite Differenz zwischen dem aktuellen Kapazitätswert des Fingerabdrucksensors des Endgeräts, das dem Entfernen des Fremdmaterials unterzogen wurde, und dem voreingestellten Referenz-Kapazitätswert zu berechnen;
zu bestimmen, dass das Fremdmaterial auf der Oberfläche des Fingerabdrucksensors vorhanden ist, wenn die zweite Differenz innerhalb des voreingestellten Fremdmaterial-Schwellenbereichs liegt; und
eine Nachricht zu senden, die angibt, dass das Fremdmaterial auf der Oberfläche des Fingerabdrucksensors vorhanden ist, um einen Benutzer zu veranlassen, das Fremdmaterial zu entfernen.

13. Vorrichtung nach Anspruch 10, wobei die erste Fremdmaterialentfernungseinheit, die konfiguriert ist, um eine Temperatur des Fingerabdrucksensors zu erhöhen, konfiguriert ist, um eines des Folgenden auszuführen:
das Erhöhen einer Leistung des Fingerabdrucksensors, um die Temperatur des Fingerabdrucksensors zu erhöhen; und
das Steuern einer Heizvorrichtung, die zu dem Fingerabdrucksensor gehört, um den Fingerabdrucksensor zu erhitzen, um die Temperatur des Fingerabdrucksensors zu erhöhen.

14. Vorrichtung nach Anspruch 8, wobei die Vorrichtung ferner Folgendes umfasst:
ein Fremdmaterial-Schwellenwerteinstellmodul, das konfiguriert ist, um den voreingestellten Fremdmaterial-Schwellenwert gemäß Experimentaldaten von Kapazitätsveränderungstests, die an dem Fingerabdrucksensor durchgeführt werden, wenn unterschiedliche leitfähige Fremdmaterialien auf der Oberfläche des Fingerabdrucksensors vorhanden sind, einzustellen.

15. Mobiles Endgerät (4), umfassend einen Fingerabdrucksensor (41) und eine Vorrichtung nach einem der Ansprüche 8 bis 13, wobei die Vorrichtung mit dem Fingerabdrucksensor (41) verbunden ist und konfiguriert ist, um ein Fremdmaterial auf einer Oberfläche des Fingerabdrucksensors (41) zu bestimmen.

## Revendications

1. Procédé pour déterminer l'existence d'un matériau étranger sur une surface d'un capteur d'empreintes digitales, **caractérisé en ce que** le procédé comprend :
l'obtention (101, 201) d'une valeur de capacitance actuelle du capteur d'empreintes digitales d'un terminal ;
le calcul (102, 202) d'une première différence entre la valeur de capacitance actuelle et une valeur de référence de capacitance prédéterminée, dans lequel la valeur de référence de capacitance prédéterminée est obtenue en l'absence de matériau étranger sur la surface du capteur d'empreintes digitales avant la sortie de l'usine ; et
la détermination (103, 203) que le matériau étranger est présent sur la surface du capteur d'empreintes digitales, lorsque la première différence est dans une plage de seuil de matériau étranger prédéterminée.

2. Procédé selon la revendication 1, dans lequel le procédé comprend en outre ce qui suit à la suite de la détermination que le matériau étranger est présent sur la surface du capteur d'empreintes digitales :
le retrait (204) du matériau étranger d'une manière prédéterminée.

3. Procédé selon la revendication 2, dans lequel le retrait (204) du matériau étranger d'une manière prédéterminée comprend :
l'augmentation d'une température du capteur d'empreintes digitales, pour retirer le matériau étranger.

4. Procédé selon la revendication 2, dans lequel le retrait (204) du matériau étranger d'une manière prédéterminée comprend :
l'envoi d'un message indiquant que le matériau étranger est présent sur la surface du capteur d'empreintes digitales, pour inviter un utilisateur à retirer le matériau étranger.

5. Procédé selon la revendication 3, dans lequel le procédé comprend en outre ce qui suit après l'augmentation d'une température du capteur d'empreintes digitales :
l'obtention de la valeur de capacitance actuelle du capteur d'empreintes digitales du terminal qui a été soumis au retrait du matériau étranger, lorsqu'un temps prédéterminé s'est écoulé ;
le calcul d'une deuxième différence entre la valeur de capacitance actuelle du capteur d'empreintes digitales du terminal qui a été soumis au retrait du matériau étranger et la valeur de référence de capacitance prédéterminée ;
la détermination que le matériau étranger est présent sur la surface du capteur d'empreintes digitales lorsque la deuxième différence est dans la plage de seuil de matériau étranger prédéterminée ; et
l'envoi d'un message indiquant que le matériau étranger est présent sur la surface du capteur d'empreintes digitales, pour inviter un utilisateur à retirer le matériau étranger.

6. Procédé selon la revendication 3, dans lequel l'augmentation de la température du capteur d'empreintes digitales comprend l'une :
de l'augmentation d'une puissance du capteur d'empreintes digitales, pour augmenter la température du capteur d'empreintes digitales ; et
de la commande d'un dispositif de chauffage correspondant au capteur d'empreintes digitales pour chauffer le capteur d'empreintes digitales, pour augmenter la température du capteur d'empreintes digitales.

7. Procédé selon la revendication 1, dans lequel le procédé comprend en outre ce qui suit avant la détermination que le matériau étranger est présent sur la surface du capteur d'empreintes digitales lorsque la première différence est dans une plage de seuil de matériau étranger prédéterminée :
l'établissement de la plage de seuil de matériau étranger prédéterminée conformément à des données expérimentales de tests de changement de capacitance qui sont effectués sur le capteur d'empreintes digitales lorsque différents matériaux étrangers conducteurs sont présents sur la surface du capteur d'empreintes digitales.

8. Appareil pour déterminer l'existence d'un matériau étranger sur une surface d'un capteur d'empreintes digitales, **caractérisé en ce que** l'appareil comprend :
un module d'obtention de valeur de capacitance (31, 421), configuré pour obtenir une valeur de capacitance actuelle du capteur d'empreintes digitales d'un terminal ;
un module de calcul de première différence (32, 422), configuré pour calculer une première différence entre la valeur de capacitance actuelle et une valeur de référence de capacitance prédéterminée, dans lequel la valeur de référence de capacitance prédéterminée est obtenue en l'absence de matériau étranger sur la surface du capteur d'empreintes digitales avant la sortie de l'usine ; et
un module de détermination de matériau étranger (33, 423), configuré pour déterminer que le matériau étranger est présent sur la surface du capteur d'empreintes digitales, lorsque la première différence est dans une plage de seuil de matériau étranger prédéterminée.

9. Appareil selon la revendication 8, dans lequel l'appareil comprend en outre :
un module de retrait de matériau étranger, configuré pour retirer le matériau étranger d'une manière prédéterminée.

10. Appareil selon la revendication 9, dans lequel le module de retrait de matériau étranger comprend :
une première unité de retrait de matériau étranger, configurée pour augmenter une température du capteur d'empreintes digitales, pour retirer le matériau étranger.

11. Appareil selon la revendication 9, dans lequel le module de retrait de matériau étranger comprend :
une deuxième unité de retrait de matériau étranger, configurée pour envoyer un message indiquant que le matériau étranger est présent sur la surface du capteur d'empreintes digitales, pour inviter un utilisateur à retirer le matériau étranger.

12. Appareil selon la revendication 10, dans lequel la première unité de retrait de matériau étranger est en outre configurée pour :
obtenir la valeur de capacitance actuelle du capteur d'empreintes digitales du terminal qui a été soumis au retrait du matériau étranger lorsqu'un temps prédéterminé s'est écoulé, après l'augmentation de la température du capteur d'empreintes digitales ;
calculer une deuxième différence entre la valeur de capacitance actuelle du capteur d'empreintes digitales du terminal qui a été soumis au retrait du matériau étranger et la valeur de référence de capacitance prédéterminée ;
déterminer que le matériau étranger est présent sur la surface du capteur d'empreintes digitales lorsque la deuxième différence est dans la plage de seuil de matériau étranger prédéterminée ; et
envoyer un message indiquant que le matériau étranger est présent sur la surface du capteur d'empreintes digitales, pour inviter un utilisateur à retirer le matériau étranger.

13. Appareil selon la revendication 10, dans lequel la première unité de retrait de matériau étranger configurée pour augmenter une température du capteur d'empreintes digitales est configurée pour exécuter l'une :
de l'augmentation d'une puissance du capteur d'empreintes digitales, pour augmenter la température du capteur d'empreintes digitales ; et
de la commande d'un dispositif de chauffage correspondant au capteur d'empreintes digitales pour chauffer le capteur d'empreintes digitales, pour augmenter la température du capteur d'empreintes digitales.

14. Appareil selon la revendication 8, dans lequel l'appareil comprend en outre :
un module d'établissement de seuil de matériau étranger, configuré pour établir la plage de seuil de matériau étranger prédéterminée conformément à des données expérimentales de tests de changement de capacitance qui sont effectués sur le capteur d'empreintes digitales lorsque différents matériaux étrangers conducteurs sont présents sur la surface du capteur d'empreintes digitales.

15. Terminal mobile (4) comprenant un capteur d'empreintes digitales (41) et un appareil selon l'une quelconque des revendications 8 à 13, dans lequel l'appareil est couplé au capteur d'empreintes digitales (41) et configuré pour déterminer la présence d'un matériau étranger sur une surface du capteur d'empreintes digitales (41).
